# EUROPEAN PATENT APPLICATION

(11) **EP 0 829 999 A1**
(43) Date of publication of application: **18.03.1998**
(21) Application number: 96306195.7
(22) Date of filing: 27.08.1996
(51) Int. Cl.: H04M 19/04, H04B 7/15

(54) **A dynamic propagation supervisor**

(71) Applicant: McFarquhar, Lord Harry, Nr. Sudbury, Suffolk CO10 7EX (GB)
(72) Inventor: McFarquhar, Lord Harry, Nr. Sudbury, Suffolk CO10 7EX (GB)

(57) **Abstract**

An electronic propagation supervisor which provides responses which set or condition electronic circuits and/or hardware in propagator nodal elements, to states determined by the supervisory codes received by the supervisor, whereby the operational properties of the Brush Fire Propagation created and maintained by the propagator nodal elements may be dynamically supervised, and/or controlled.

## Description

This invention relates to an electronic propagation supervisor for the dynamic supervision of Brush Fire Propagation by means of dynamic supervision, configuration, and control of propagator nodal elements.

The term "Brush Fire Propagation" used here relates to the method of propagating coded signals throughout individual networks of propagator nodal elements, as described in UK Patent Application GB 2267413A.

An important feature of this method of propagation is that the propagation is "outward"; in that once a propagator (nodal element) has transmitted a particular set of codes it will not re-transmit that set during the lifetime of the propagation of that set of codes. This timing period is an important factor in Brush Fire Propagation. However, UK Patent Application GB 2267413A does not describe propagators which are able to have this timing period to be altered dynamically, that is, during operation.

In that application, this timing period would thus be fixed either at manufacture level, or at the level of physical hands-on alteration/modification.

Similarly, UK Patent Application GB 2267413A does not describe propagators which are able to have other properties and/or conditions, which may affect propagation, to be altered dynamically. In that application, these other properties and/or conditions would thus also be fixed either at manufacture level, or at the level of physical hands-on alteration/modification.

Propagators of the kind described in UK Patent Application GE 2267413A will be referred to in this current application as "fixed propagators".

Fixed propagators are highly specific in their application areas. For instance, a timing period for lifetime of propagation, fixed at the period between ring pulses of PABX extensions, may be very suitable for a network which forms the basis of a PABX paging system, but it may be highly unsuitable for a network serving a different purpose.

Whilst this fixed nature does not prevent such propagators from being commercially viable, it does act as a constraint to the wider applicability of a particular construction of propagator.

This constraint can be overcome by using propagators which are capable of being dynamically supervised. The propagation enabled by dynamic supervision has many practical and commercial advantages over the propagation offered by fixed propagators at the design, manufacturing, warehousing, retailing, and end-user levels.

A further considerable advantage of dynamic supervision is that individual propagators, or groups of propagators can be tested, interrogated, configured, controlled, and/or supervised in situ - without the need for physical hands-on alteration/modification. This range of features cannot be achieved by fixed propagators.

Dynamic supervision of a propagator is achieved by including, within its design and/or construction, a supervisor stage or module or assembly which is electronically situated so that it receives signals and/or codes from the propagator receiver/decoder stages, and so that it is able to directly affect the electronic circuits of the propagator, including its logic, processing, and memory stages.

The supervisor responds to supervisory codes which are transmitted with each set of codes, and, depending upon the status of the supervisory codes, sets or conditions various control and/or configuration states in the individual propagators. These states determine the operational behaviour of the individual propagators which, in turn, determine the properties of the propagation.

The supervisor is highly amenable to design and manufacturing preferences: for example, it may be constructed and used as a modular component of a modular design of propagator, or it may form part of the circuitry of an integrated design.

The method of operation of the supervisor is also highly amenable to design and manufacturing preferences. Examples are described later in this application.

Similarly, the positioning of the supervisory codes within the code sets is highly amenable to design and manufacturer preferences: for example, the supervisory codes may be at the beginning of the code sets, or at the end. Examples such as these are further described later in this application.

Purpose built control units may be used to initiate interrogation, configuration, control, and supervision of propagators; they may also be used to collect, store, and process data from propagators. These control units may be the subjects of future patent and copyright applications.

According to the present invention there is provided an electronic propagation supervisor comprising: means to provide responses, which set or condition the control and/or configuration states in the electronic circuits of individual propagators, including logic, processing, and memory stages, to states determined by the supervisory codes received by the supervisor, whereby the operational properties of the Brush Fire Propagation created and maintained by the propagators may be dynamically supervised and/or controlled.

Specific embodiments of the invention will now be described by way of examples.

### BASIS OF SUPERVISION

The supervisor provides a range of responses to supervisory codes. These responses provide the means of affecting the configuration and control states of the propagator, which, in turn, affect the propagation properties it exhibits.

The responses also provide the means to affect the status of external circuitry and/or hardware, which may be associated with a propagator.

Examples of providing responses are shown below in the section METHODS OF PROVIDING RESPONSES.

Supervisory codes are included in transmitted sets of codes, or code sets. The structure of the code set is described below in the section A CODE SET.

Examples of propagation properties are shown below in the section MODES OF PROPAGATION.

Examples of responses are shown below in the section BASIC SUPERVISOR RESPONSES.

### METHODS OF PROVIDING RESPONSES

The supervisory codes are amenable to various methods of encoding and decoding which meet the preferences of designers and manufacturers. For example, they may be intimately related to the hardware which provide the responses, or they may themselves be dynamically configurable.

Similarly, there are many methods available for providing the responses to the codes, thus, these too are amenable to the preferences of designers and manufacturers. For example, the responses may be provided by immediate hardware responses to the codes, or they may be provided via intermediate mapping or decoding stages; if digital techniques are employed the responses may be on a "bit per response" basis, or on a "bit pattern per response" basis.

### A CODE SET

An individual transmission from a propagator or control unit will consist of at least one set of codes or signals (the codes or signals may involve digital techniques, but they are not limited to digital techniques). Each set of codes, or code set, includes supervisory codes and may include an identity code: the identity code may include a network identity code and a propagator (unit) identity code.

An individual transmission may consist of a single code set, however, it may also consist of a chain of code sets.

Chains of code sets enable many useful features. For example, to convey data to a particular propagator (the data may be configuration and/or control data): this can be carried out in the following way: the first code set in the chain specifies the identity and supervisory codes for the target propagator, and the subsequent code sets in the chain contain the data.

The position of the supervisory codes within a code set is amenable to design and manufacturing preferences. However, some applications may favour one position rather than another. For example, if the application area is for personal paging devices which are worn by people, then low power consumption may be a particularily important factor in their design - on the grounds that it directly relates to battery weight. In such a case it would be preferable for the pager devices to spend as much time in an idle state as possible so as to conserve battery power. If the supervisory codes for these devices was at the end of a code set then they would have to receive an entire transmission before they could reject it on the grounds that a transmission was not for them, if the supervisory codes were at the beginning of the code set then the devices could switch to an idle state as soon as they recognised that a transmission was not for them - thus conserving power.

### COMBINATIONS OF SUPERVISORY CODES

The supervisory codes are intended to be used in various combinations so that a wide range of propagation properties may be effected. For example, a code that instructs a propagator to reply with its status may be combined with a code that instructs that the propagator is no longer to respond to internal states.

It should be noted that the supervisory codes are capable of being combined in unsuitable ways, their sensible selection may be determined at manufacture or in-service levels.

### MODES OF PROPAGATION

Modes of propagation are important properties, the supervisor responses will enable these. The following examples illustrate some important modes.

Mode 1: general propagation - such as when a propagator initiates propagation in response to a status condition originating from a device. For example, a status condition originating from a ring detect device. This mode can be achieved by fixed propagators, it is also enabled by the supervisor.

Mode 2 : specific propagation - such as when a specific propagator initiates propagation only when requested to do so. This mode can only be achieved by specifying and recognising special codes, it cannot be achieved by fixed propagators, the supervisor enables this mode.

Mode 3 : supervisory propagation - such as when a specific propagator is targeted for supervision, configuration, or control. This mode can only be achieved by specifying and recognising special codes, it cannot be achieved by fixed propagators, the supervisor enables this mode.

Mixed Modes : any combination of the 3 modes listed above. For example, the properties of Modes 1 and 2 - such as when a specific propagator initiates propagation when requested to do so (Mode 2), and also initiates propagation in response to a status condition originating from a device (Mode 1). This mode can only be achieved by specifying and recognising special codes. The supervisor enables these mixed modes.

### BASIC SUPERVISOR RESPONSES

The following examples provide a range of responses which meet the basic requirements of supervised propagation.

Examples of converse responses are also shown, where they may be useful.

Supervisors may be constructed so that they provide appropriate default responses to be used in the absence of specific codes; examples of these are also shown.
1) A response to an IGNORE NETWORK IDENTITY code : this indicates that the accompanying network identity code in this code set is not to be tested, thus all propagator network identities match.
   The converse is a response to an OBEY NETWORK IDENTITY code (this may be a default): this indicates that the accompanying network identity code in this code set is to be tested, if it is not this propagator's network then the transmission may be rejected.
2) A response to an IGNORE UNIT IDENTITY code : this indicates that the accompanying propagator identity code in this code set should not be tested, thus all propagator identities match, and they should each respond in accordance with the propagator's configuration and status, which may be subject to other supervisory codes accompanying this one.
   The converse is a response to an OBEY UNIT IDENTITY code (this may be a default) : this indicates that the accompanying propagator identity code in this code set is to be tested, if it is this propagator's identity then the propagator is to respond in accordance with its configuration and status, which may be subject to other supervisory codes accompanying this one; if it is not this propagator's identity then the propagator may propagate the transmission.
3) A response to an IGNORE CODES code : this indicates that the other supervisory codes and the accompanying network and propagator identity codes in this code set should simply be stored without testing them for identity. They are to be treated simply as data. The configuration and status of the propagator will therefore not be altered from the previous states.
   The converse is a response to an OBEY CODES code (this may be a default) : this indicates that the other supervisory codes in this code set should be obeyed.
4) A response to a RESPOND UNIT IDENTITY code : this indicates that a specific propagator is to respond to this transmission, when it does respond it is to do so with a RESPONDING UNIT IDENTITY supervisory code specified in its supervisory codes.
   There is no essential requirement for a response to a converse code.
5) A response to a RESPONDING UNIT IDENTITY code : this indicates that the code set originated from a specific propagator which has responded to a RESPOND UNIT IDENTITY code, this response enables propagators to distinguish between query propagation to a propagator and reply propagation from it.
   There is no essential requirement for a response to a converse code.
6) A response to an IGNORE INTERNAL code : this indicates that the propagator is not to respond to internal states.
   The converse is a response to a RESPOND INTERNAL code (this may be a default) : this indicates that the propagator is to respond to internal states, such as a status signal from a device such as a ring detect device.
7) A response to a SET TIMER OVERALL code : this indicates that the propagator's main timer period is to be set according to the value stored in the accompanying codes in the code set.
   The converse is a response to a DONT ALTER TIMER OVERALL code (this may be a default): this indicates that the existing main timer period is not to be affected.
8) A response to a SET TIMER WAIT code : this indicates that the propagator's delay timer period is to be set according to the value stored in the accompanying codes in the code set.
   The converse is a response to a DONT ALTER WAIT OVERALL code (this may be a default) : this indicates that the existing delay timer period is not to be affected.
9) A response to a SET STATUS code : this indicates that the status of a specific electronic circuit (or other component, such as memory) is to be set; the circuit or component may be related to the propagator or it may be associated with an external device.
   There is no essential requirement for a response to a converse code.
10) A response to a QUERY STATUS code : this indicates that the status of a specific electronic circuit (or other component, such as memory) is to be queried; the circuit or component may be related to the propagator or it may be associated with an external device. When a propagator responds to this code it is to do so with a RESPONDING QUERY code specified in its supervisory codes.
   There is no essential requirement for a response to a converse code.
11) A response to a RESPONDING QUERY code : this indicates that the code set originated from a specific propagator which has responded to a QUERY STATUS code, this response enables propagators to distinguish between query propagation to a propagator and reply propagation from it.
   There is no essential requirement for a response to a converse code.
12) A response to a SET DEFAULTS code : this indicates that the propagator is to be set to its default settings.
   There is no essential requirement for a response to a converse code.
13) A response to a RESPOND NETWORK IDENTITY code : this indicates that a propagator is to respond to this transmission, when it does respond it is to do so with the RESPONDING NETWORK IDENTITY code specified in its supervisory codes.
   There is no essential requirement for a response to a converse code.
14) A response to a RESPONDING NETWORK IDENTITY code : this indicates that the code set originated from a propagator which has responded to a RESPOND NETWORK IDENTITY code, this response enables propagators to distinguish between query propagation to a propagator and reply propagation from it.
   There is no essential requirement for a response to a converse code.
15) A response to a CHANGE NETWORK IDENTITY code : this indicates that the accompanying propagator network identity code in the code set is to be tested, if it is this propagator's network identity then the transmission should be propagated, if it is not this propagator's network identity then the accompanying network identity code is to be changed to this propagator's network identity code and the propagator is to propagate the changed code set, with the ALTERED NETWORK IDENTITY code specified in its supervisory codes.
   The converse is a response to a DONT LEAP NETWORK code (this may be a default) : this indicates that the propagation is not to cross over to networks with different identities.
16) A response to an ALTERED NETWORK IDENTITY code : this indicates that the code set originated from a specific propagator which has responded to a CHANGE NETWORK IDENTITY code, this response enables propagators to distinguish between query propagation to a propagator and reply propagation from it.
   There is no essential requirement for a response to a converse code.

### OTHER RESPONSES

Many other responses are possible, and these may be provided to meet the needs of particular designs and application areas. For example, a particular design may be intended to be used in a variety of application areas which require one or more external circuits to be controlled; a basic design may thus include responses to enable control over more than one circuit - even though only one of these may be used in any of the particular application areas.

## Claims

1. An electronic propagation supervisor comprising: means to provide responses, which set or condition the control and/or configuration states in the electronic circuits of individual propagators, including logic, processing, and memory stages, to states determined by the supervisory codes received by the supervisor, whereby the operational properties of the Brush Fire Propagation created and maintained by the propagators may be dynamically supervised and/or controlled.

2. An electronic propagation supervisor as claimed in Claim 1, wherein there is means to provide default control and/or configuration states in the electronic circuits of individual propagators, including logic, processing, and memory stages.

3. An electronic propagation supervisor as claimed in any preceding Claims, wherein there is means to receive input signals and codes from electronic circuits and/or hardware.

4. An electronic propagation supervisor as claimed in any preceding Claims, wherein means is provided to generate and encode supervisory codes based upon the internal states of the supervisory module, as well as from input signals and codes.

5. An electronic propagation supervisor as claimed in any preceding Claims, wherein means is provided to transmit encoded output codes and signals to electronic circuits and/or hardware.
